# EUROPEAN PATENT SPECIFICATION

(11) **EP 3 168 715 B1**
(45) Date of publication and mention of the grant of the patent: **27.02.2019**
(21) Application number: 16195921.8
(22) Date of filing: 27.10.2016
(51) Int. Cl.: G06F 3/02, B29C 45/14, G06F 3/041, G06F 3/044, G07C 9/00, H03K 17/96, B60R 13/04, B29L 31/30, B29L 31/34, B29K 75/00, B60R 25/23, B62D 25/04, B60R 13/02, G06F 3/0488

(54) **PLASTIC MOULDING WITH SEAMLESS HUMAN-TO-VEHICLE INTERFACE INTEGRATION**
KUNSTSTOFFFORMTEIL MIT NAHTLOSER HUMAN-TO-VEHICLE INTEGRATIONSSCHNITTSTELLE
MOULAGE PLASTIQUE AVEC INTÉGRATION D'INTERFACE HOMME-VÉHICULE CONTINUE

(30) Priority: 16.11.2015 EP 15382568
(43) Date of publication of application: 17.05.2017
(73) Proprietor: SRG Global Liria, S.L.U., 46160 Liria, Valencia (ES)
(72) Inventor: COLÓN RODRIGUEZ, Fernando, 46160 Liria, Valencia (ES); GRANDIA RODRIGO, Javier, 46160 Liria, Valencia (ES)
(74) Representative: Hoyng Rokh Monegier LLP

(56) References cited:
- US-A- 4 501 790
- US-A1- 2008 202 912
- US-A1- 2008 257 706
- US-A1- 2010 013 499
- US-A1- 2014 036 428

## Description

### FIELD

The present disclosure generally relates to vehicle pillars and, more particularly, to a vehicle pillar having a plastic moulding/molding with seamless human-to-vehicle interface integration.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A vehicle can include a plurality of vertical supports for its window area or cabin. These supports are commonly referred to as pillars. Each pillar can correspond to a particular position from a front to a rear of the window area. More particularly, a first pillar near a front of the vehicle's windshield can be referred to as an A-pillar and a second pillar after the vehicle's front passenger window can be referred to as a B-pillar. Depending on the configuration of the vehicle (i.e., a number of other sets of passenger windows), there can be some or no other intermediary pillars before a last pillar near a rear of the vehicle's rear windshield (e.g., a C-pillar for a conventional coupe or sedan). In addition to providing structural support for the vehicle, these pillar assemblies may incorporate other vehicle components.

Further attention is drawn to US20080257706A1, disclosing an article of manufacture having an in-molded capacitive switch and method of making the same are shown and described. In one disclosed method, a conductive ink sensing zone is printed on a film. The film is formed to a desired shape and put in an injection mold. A molten plastic material is introduced into the injection mold to form a rigid structure that retains the film.

In US20080202912A1 there is disclosed a proximity sensor for controlling a component that may be installed on a window, on an interior or exterior pillar of a vehicle, on a control panel or any suitable location on a vehicle or any other structure. The sensor includes a substrate and a conductive layer disposed on the substrate. The conductive layer is formed from a conductive ink composition with the conductive layer defining at least one circuit for controlling the component when a user is in proximity to the conductive layer. A protective layer is disposed over the conductive layer.

Furthermore, in US20140036428A1 there is presented a method comprising: patterning one or more electrical layers on a substrate; shaping the patterned substrate into a 3-dimensional contour, wherein the contour including a significant change in gradient in or adjacent to one or more sensing areas of the electrical layer, and over-moulding the shaped substrate, wherein degradation of a trace in the electrical layer at or adjacent to the one or more sensing areas during shaping and/or over-moulding is substantially minimised based on the width of the trace, the thickness or number of layers of the trace, the bending radius of the trace, the material of the trace, and/or a primer over layer on the trace.

Additionally, in US20100013499A1 there is disclosed a method for forming an in-molded capacitive sensing device a plastic film is provided, the plastic film comprising a first side and a second side. A capacitive sensor pattern is disposed on at least a portion of the second side, the capacitive sensor pattern including a region for facilitating electrical contact. A resin layer is printed over a portion of the capacitive sensor pattern such that access to the region for facilitating electrical contact is maintained.

Also, US4501790A presents a fiber-reinforced urethane molding comprises a molded urethane layer reinforced by inclusion of reinforcing fibers, and a hard urethane-based coating film overlaid on the surface of the molded urethane layer.

### SUMMARY

According to another aspect of the present disclosure, a pillar assembly for a vehicle and its method of manufacture are presented. In one exemplary implementation, the method can comprise obtaining a first film layer; forming decorative features with respect to a first side of the first film layer and applying conductive ink to an opposing second side of the first film layer to obtain a modified first film layer; obtaining a separate second film layer; at least one of printing and attaching electronic elements to a first side of the second film layer to obtain a modified second film layer, the electronic elements including light-emitting devices; injecting a transparent or translucent polymer between the second side of the modified first film layer and the first side of the modified second film layer; and after injecting the transparent or translucent polymer, flooding a material over the first side of the modified first film layer to form a transparent layer.

In some implementations, the method can further comprise obtaining a pillar insert comprising the modified first film layer, the modified second film layer, and the transparent or translucent polymer therebetween, and using the pillar insert as an insert for injection molding another component to form the pillar assembly, wherein the flooding is performed after forming the pillar assembly.

In some implementations, the first film layer is opaque, and the decorative features correspond to at least one of apertures, colors, and opaque/transparent ink mixtures defined by the modified first film layer. In other implementations, the first film layer is transparent or translucent, and the decorative features correspond to portions of the first side of the modified first film layer that are not covered by an opaque ink or material.

In some implementations, the material used in the flooding is polyurethane.

In some implementations, the electronic elements further include (i) first wiring connected to the light-emitting devices and configured to be connected to control circuitry and (ii) second wiring connected to the conductive ink and configured to be connected to the control circuitry.

In some implementations, the decorative features, when illuminated by the light-emitting devices, represent at least one of numbers, letters, and symbols.

In some implementations, the injection molding of the other component includes forming at least a back piece or substrate for the pillar assembly, the back piece or substrate being formed of the transparent or translucent polymer or a different material.

According to another aspect of the present disclosure, a pillar assembly for a vehicle and its method of manufacture are presented. In one exemplary implementation, the pillar assembly can comprise a substrate, a transparent layer, and a transparent flexible film layer sealed between the substrate and the transparent layer, the film layer having disposed thereon or attached thereto: an opaque material defining apertures corresponding to displayable elements; a capacitive-sensing layer; a plurality of light emitting devices disposed proximate to the apertures; and wiring connected to the plurality of light emitting devices and the capacitive-sensing layer, the wiring being configured to connect to control circuitry.

In some implementations, the substrate is a thermoplastic polymer and the transparent layer is a thermoplastic. In some implementations, the thermoplastic polymer substrate comprises acrylonitrile butadiene styrene (ABS), and the transparent thermoplastic layer comprises polymethyl methacrylate (PMMA)

In other implementations, the transparent layer is formed using a flooding process. In some implementations, the transparent layer comprises polyurethane.

In some implementations, when activated, the plurality of light emitting devices are configured to illuminate the displayable elements for viewing by a user. In some implementations, at least one of the capacitive-sensing layer and the control circuitry are configured to capture a touch input or a gesture from a user.

Further areas of applicability of the present disclosure will become apparent from the detailed description provided hereinafter. It should be understood that the detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIGS. 1A-1D illustrate a conventional vehicle pillar assembly incorporating a touchpad system according to the prior art;
FIGS. 2A-2B illustrate the touchpad system of FIG. 1 and user interaction therewith;
FIG. 3 is a cross-sectional view of an example vehicle pillar assembly incorporating a touchpad system according to some implementations of the present disclosure;
FIGS. 4A-4B are perspective views of the example vehicle pillar assembly of FIG. 3;
FIG. 5 is a flow diagram of an example method for manufacturing a vehicle pillar assembly incorporating a touchpad system according to some implementations of the present disclosure;
FIG. 6 is a cross-sectional view of another example vehicle pillar assembly incorporating a touchpad system according to some implementations of the present disclosure; and
FIG. 7 is a flow diagram of another example method for manufacturing a vehicle pillar assembly incorporating a touchpad system according to some implementations of the present disclosure.

### DETAILED DESCRIPTION

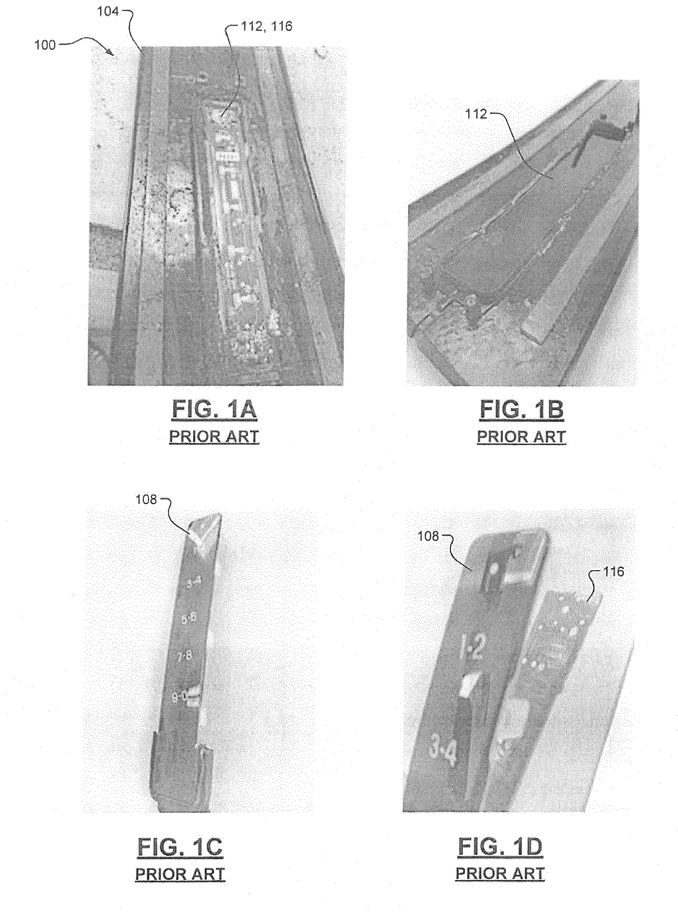

As previously mentioned, vehicle pillar assemblies may incorporate other vehicle components. One such component is a touchpad system. This touchpad system could be for receiving a key code (e.g., a combination of digits 0-9 and/or other characters) for unlocking the vehicle, such as when the driver doesn't want to use her/his keys or when she/he is otherwise locked out of the vehicle. Such a system could be incorporated in the B-pillar, for example, due to its proximity to the vehicle's driver door. A conventional pillar assembly including a touchpad system is illustrated in FIGS. 1A-1D. The assembly 100 can include a substrate 104 and a transparent cover layer 108. FIGS. 1A-1B illustrate a back view of the substrate 104 with and without a touchpad system 116 and FIGS. 1C-1D illustrate a front view of the transparent cover layer 108 and the touchpad system 116.

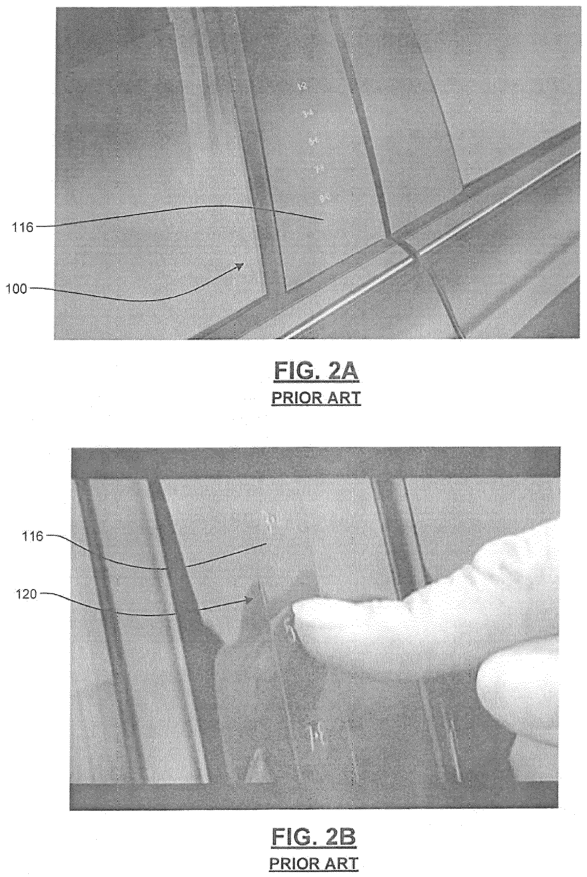

The substrate 104 can define an aperture 112 in which the touchpad system 116 can be disposed. To prevent moisture and/or dust from affecting operation of the touchpad system 116, the touchpad system 116 or the entire assembly 100 can be sealed using additional sealant materials. Because the touchpad system 116 is a separate system disposed in the aperture 112 of the substrate 104, however, the touchpad system 116 may be visible to a user. FIGS. 2A-2B illustrate the touchpad system 116 and user interaction therewith. As can be seen, the touchpad system 116 is clearly visible to a user, even when not being operated (e.g., illuminated). Moreover, as shown in FIG. 2B, the touchpad system 116 is bulky and may be very deformable in response to the user's touch (see 120). This visibility and tactile feel of the touchpad system 116 is not desirable for the user.

Accordingly, a plastic moulding/molding with seamless human-to-vehicle interface integration is presented. In one exemplary implementation, the plastic molding is a B-pillar assembly that incorporates a touchpad system for human-to-vehicle interfacing, but it will be appreciated that the systems/methods of the present disclosure can be applicable to other vehicle pillar assemblies (e.g., A or C pillar assemblies) as well as other vehicle components or consumer electronics. The presented pillar assembly can be thinner and less bulky than conventional pillar assemblies incorporating touchpad systems. These pillar assemblies can also be less or non-visible to the user when inactive/non-illuminated, and can also provide for a better tactile feel for the user (e.g., a less deformable response when pressed by bringing the capacitive-sensing layer closer to the user and decreasing the number of intermediate layers). Further, by incorporating at least some of the touchpad system components (e.g., opaque graphics, conductive layer, light sources, etc.) on a thin, transparent flexible film layer, the B-pillar assembly can be formed by injection molding the substrate layer and the transparent layer with the film layer sealed therebetween. This can eliminate the need for multiple intermediary layers and additional sealing materials to protect the touchpad system from moisture and/or dust. Further, the printed circuits on the film layer can be tested at any point up until the final assembly forming process (e.g., the very last moment before the end of the injection molding process).

While injection molding is specifically discussed herein, it will be appreciated that other processes could be utilized to form at least a portion of the assembly. For example, and as discussed in greater detail later herein, a flooding process could be utilized where the pillar is covered with a very thin (e.g., compared to other manufacturing processes) transparent layer, such as polyurethane. More particularly, the pillar could be inserted into a mold or container and a liquid material (e.g., polyurethane) can be poured into the mold/container, thereby "flooding" the pillar. After setting, the flooding material will be a very thin layer attached to the pillar. In some cases, the entire pillar could be flooded, thereby sealing the pillar within the flooding material. This could provide for improved resistance for the pillar assembly to moisture and other environmental conditions.

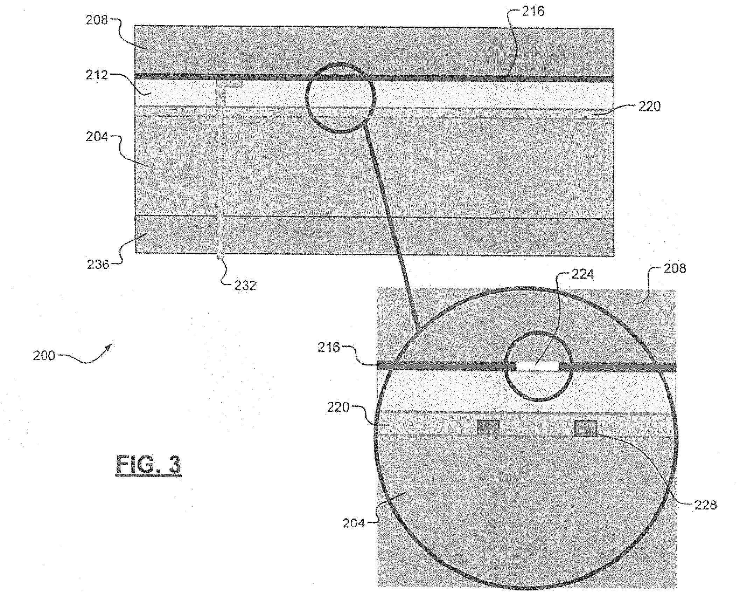

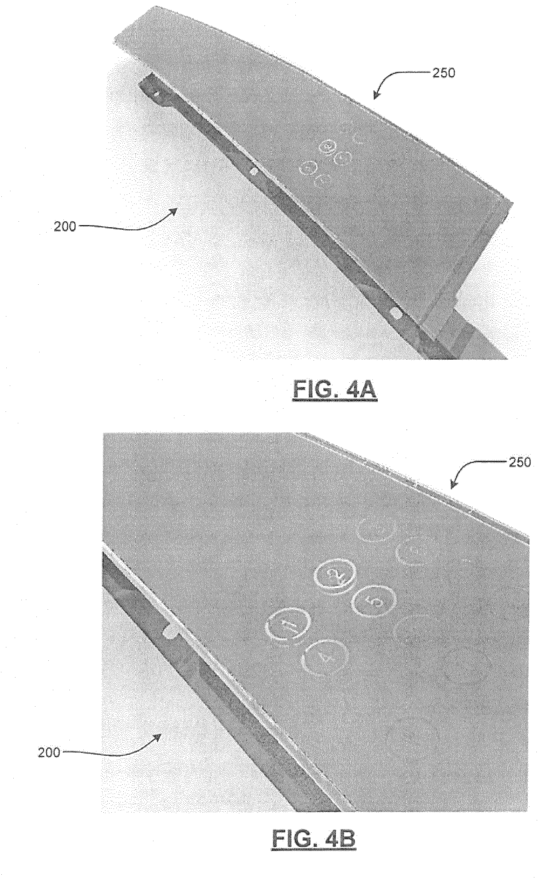

Referring now to FIGS. 3 and 4A-4B, cross-sectional view and perspective views of an example pillar assembly 200 according to some implementations of the present disclosure are illustrated. While a pillar assembly is discussed herein, it will be appreciated that the pillar assembly 200 may be only a portion of a full pillar assembly that includes other components (e.g., structural metal). The assembly 200 can include a base layer or substrate 204. In some implementations, the substrate is a thermoplastic polymer, such as acrylonitrile butadiene styrene (ABS), but it will be appreciated that other materials could be utilized. The assembly 200 can also include a top or transparent layer 208, such as polymethyl methacrylate (PMMA), also known as acrylic or acrylic glass, but it will be appreciated that other transparent or semi-transparent materials could be utilized (e.g., polyurethane). The choice of materials can be made to provide for good chemical adherence between the substrate, the film layer, and the transparent layer, thereby providing for the requisite mechanical properties while also isolating function of the film layer (e.g., the touchpad system components). Disposed between the substrate 204 and the transparent layer 208 can be an intermediate film layer 212.

This film layer 212 can be a thin flexible transparent layer having at least some of the components of a touchpad system disposed thereon. For example, at least some of these components can be printed circuit components on the film layer 212. In some implementations, these components can include a graphics layer 216 comprising an opaque material (e.g., a black, non-conductive ink) disposed between the transparent layer 208 and the film layer 212. The opaque graphics layer 216 can define a plurality of transparent portions or apertures 224 corresponding to displayable elements (digits 0-9, alphabetical characters, non-alphabetic symbols, etc.) for the touchpad system. In some implementations, these components can also include a capacitive-sensing or conductive layer 220 disposed between the substrate 204 and the film layer 212. This capacitive-sensing layer 220 can be configured to receive a touch input from a user (e.g., to input a key code in an attempt to unlock the vehicle). A zoomed-in portion of the cross-sectional view illustrates one of the plurality of apertures 224 in the opaque graphics layer 216. In some implementations, the opaque graphics layer 216 can also define a desired color of the system.

The conductive layer 220 can also have light sources 228 (e.g., light-emitting diodes or LEDs) disposed thereon. The light sources 228, when illuminated, can provide back-lighting that can illuminate the displayable elements by emitting light through the apertures 224 of the opaque graphics layer 216 (see FIGS. 4A-4B at 250). Wiring 232 can be coupled to the light sources 228 and the conductive layer 220. The wiring 232 can also be coupled to control circuitry, such as a printed circuit board (PCB) and/or an electronic control unit (ECU), shown as layer 236. For example, the wiring 232 may be run through the substrate 204. While the control circuitry 236 (e.g., PCB/ECU) is shown as being disposed as a layer behind the substrate 204, it will be appreciated that these components could be located at another location, such as to further decrease the thickness of the assembly 100. In some implementations, the control circuity 236 is a thin PCB coupled to the back of the substrate 204.

It will also be appreciated that the control circuitry 236 can include one or more communication devices, such as near field communication (NFC) device and/or a Bluetooth low-energy (BLE) device. Implementing such communication devices enables interoperability between the control circuitry 236 and other devices, such as user smartphones, tablets, and wearable computing devices (smartwatches, smart eyewear, etc.). This can improve the functionality of the pillar assembly 200 (e.g., by enabling a user to unlock the vehicle via his/her smartphone). In addition to providing discrete touch inputs that are captured by the capacitive-sensing layer, it will be appreciated that the user could input a slide input pattern (e.g., using a single touch input without breaking contact with the pillar assembly). It will also be appreciated that the user could provide a gesture or a pattern of gestures (e.g., a wave of the user's hand) without physically touching the pillar assembly, and these gesture(s) could be interpreted by the capacitive-sensing layer 220 and/or the communication device(s).

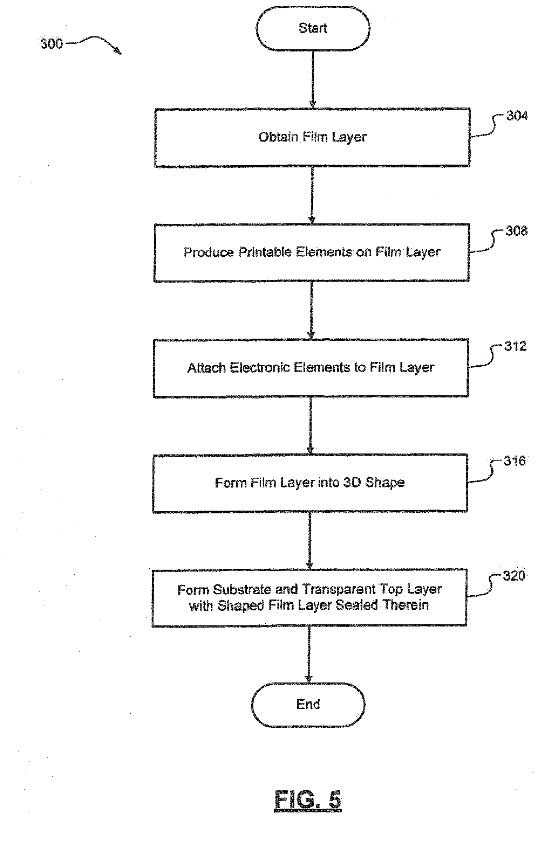

Referring now to FIG. 5, a flow diagram of an example method 300 for manufacturing the vehicle pillar assembly 200 according to some implementations of the present disclosure is illustrated. At 304, the film layer 212 is obtained. At 308, printed components (e.g., the conductive layer 220, the opaque graphics layer 216, and/or a portion of the wiring 232) are produced on the film layer 212, such as via screen printing or any other suitable process. At 312, electronic elements (e.g., the light sources 228 and/or a portion of the wiring 232) are attached to the film layer 212. At 316, the film layer 212 is formed into a three-dimensional shape (e.g., a slightly curved elongate shape). Example shape forming processes can include vacuum and pressure thermoforming, although it will be appreciated that other techniques can be utilized. It will be appreciated that step 316 can be optional. In other words, depending on the design of the final pillar assembly, the film layer 212 may or may not need to be preformed prior to injection molding. At 320, the film layer 212 is injection molded into the pillar assembly 200. Further, while a pillar assembly is shown and discussed herein, it will be appreciated that the system/method of the present disclosure could be similarly applied to other vehicle pillars or other vehicle structures (e.g., a vehicle tailgate).

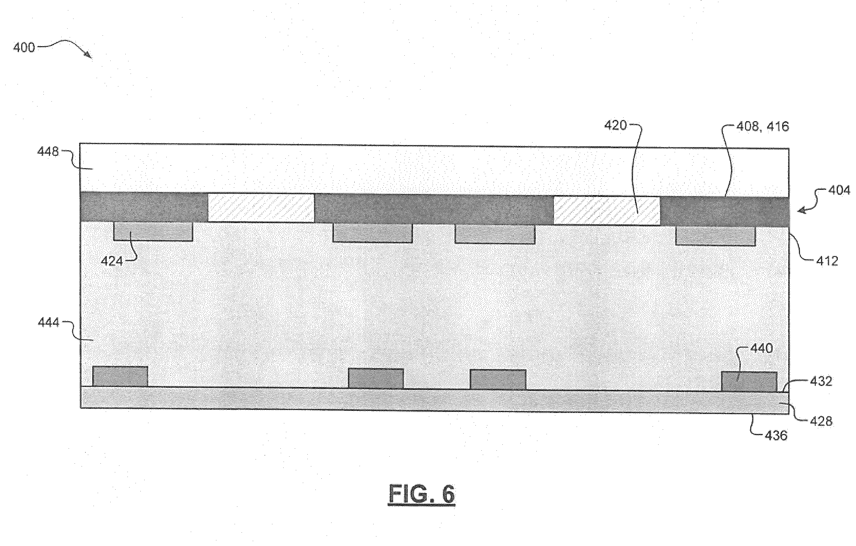

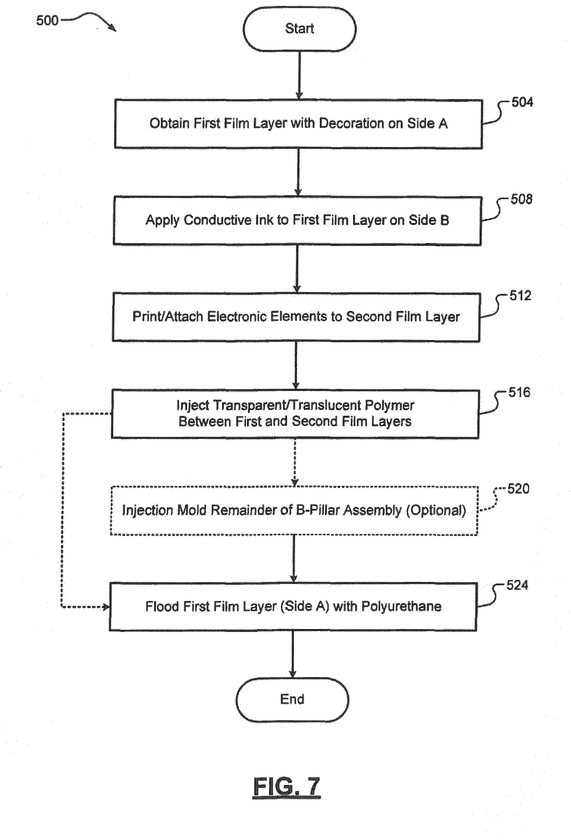

Referring now to FIGS. 6-7, a cross-sectional view of another example pillar insert 400 and a flow diagram of an example method 500 for its manufacture are illustrated. At 504, a first film layer 404 having decorative features is obtained. This first film layer 404 can define two sides: side A 408 and side B 412. The decorative features of the first film layer 404 can be defined by various opaque regions 416 and translucent or transparent regions 420. For a translucent or semi-transparent region, for example, transparent inks could be mixed with opaque inks used for the decoration, thereby creating a translucent or semi-transparent ink for the regions 420. When not fully-transparent, these regions 420 may provide a "hidden until lit" effect. In other words, these regions 420 may not be readily visible to the user until the backlighting is activated. This seamless integration may provide for a more aesthetically pleasing design. Instead of translucent or transparent regions 420, the first film layer 404 could be completely opaque, but could further define apertures in place of the translucent or transparent regions 420. For example only, the first film layer 404 could be transparent and a mask could be applied thereto, after which an opaque ink or other material could be applied to side A 408 of the first film layer 404. At 508, conductive ink or capacitive sensing layer 424 can be applied to side B 412 of the first film layer 404. It will be appreciated that steps 504 and 508 could be performed in either order, although the conductive ink or capacitive sensing layer 424 may need to be arranged with respect to the decorative features.

At 512, a second film layer 428 is obtained and, on its side A 432 (as opposed to its side B 436), electronic elements are printed thereon or otherwise attached thereto. While these electronic elements are illustrated as light-emitting devices 440, it will be appreciated that additional circuitry (e.g., wiring) could be printed/attached to the A side 432 of the second film layer 428. For example, first wiring could attach to the light-emitting devices 440 and second wiring could attach to the capacitive sensing layer 424, and these wirings could be configured to be attached to control circuitry. In some implementations, the first film layer 404 and the second film layer 428 are electrically connected, such as by adding metallic springs attached to both films 404, 428 with conductive adhesive and conductive inks. At 516, a transparent/translucent polymer layer 444 is injected between the first film layer 404 and the second film layer 428 as shown.

At optional 520, the remainder of the pillar assembly is injection molded. This step could also include shaping the pillar insert 400 to a desired three-dimensional shape (e.g., a curved piece). For example, the pillar insert 400 can be used as an insert to a mold and other components can be injection molded (e.g., a back piece or substrate formed of ABS or another suitable material) to obtain a final pillar assembly. This could also include forming a transparent cover piece (e.g., formed of PMMA), thereby sealing the pillar insert 400 therein. In one exemplary implementation, these other component(s) could be formed of the same transparent or translucent polymer/plastic as layer 444. In such an implementation, for example, the other component(s) and layer 444 could be formed during a same molding shot at step 516. Thus, step 520 may not be required. Such a design could decrease manufacturing time/resources. Lastly, at 524, A-side 408 of the first film layer 404 is flooded with a material (e.g., polyurethane) to form a transparent layer 448 of the final pillar assembly. The method 500 can then end.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known procedures, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The term "and/or" includes any and all combinations of one or more of the associated listed items. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

As used herein, the term module may refer to, be part of, or include: an Application Specific Integrated Circuit (ASIC); an electronic circuit; a combinational logic circuit; a field programmable gate array (FPGA); a processor or a distributed network of processors (shared, dedicated, or grouped) and storage in networked clusters or datacenters that executes code or a process; other suitable components that provide the described functionality; or a combination of some or all of the above, such as in a system-on-chip. The term module may also include memory (shared, dedicated, or grouped) that stores code executed by the one or more processors.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method (500) of manufacturing a pillar insert (400) for a pillar assembly (200) of a vehicle, the method comprising:
obtaining (504) a first film layer (404);
forming decorative features with respect to a first side (side A, 408) of the first film layer (404) and applying (508) conductive ink to an opposing second side (side B, 412) of the first film layer (404) to obtain a modified first film layer;
obtaining (512) a separate second film layer (428);
at least one of printing and attaching (512) electronic elements (440) to a first side (side A, 432) of the second film layer (428) to obtain a modified second film layer, the electronic elements (440) including light-emitting devices;
injecting (516) a transparent or translucent polymer (444) between the second side (412) of the modified first film layer (404) and the first side (432) of the modified second film layer (428);
after injecting the transparent or translucent polymer (444), flooding (524) a material over the first side (408) of the modified first film layer (404) to form a transparent layer (448).

2. The method (500) of claim 1, further comprising:
obtaining a pillar insert (400) formed of the modified first film layer (404), the modified second film layer (428), and the transparent or translucent polymer (444) therebetween; and
using the pillar insert (400) as an insert for injection molding (520) another component to form the pillar assembly (200),
wherein the flooding (524) is performed after forming the pillar assembly (200).

3. The method (500) of claim 1, wherein the first film layer (404) is opaque, and wherein the decorative features correspond to apertures (224) defined by the modified first film layer (404).

4. The method (500) of claim 1, wherein the first film layer (404) is transparent or translucent, and wherein the decorative features correspond to portions of the first side (408) of the modified first film layer (404) that are not covered by an opaque ink or material (416).

5. The method (500) of claim 1, wherein the material used in the flooding (524) is polyurethane.

6. The method (500) of claim 1, wherein the electronic elements (440) further include
(i) first wiring connected to the light-emitting devices and configured to be connected to control circuitry and
(ii) second wiring connected to the conductive ink and configured to be connected to the control circuitry.

7. The method (500) of claim 1, wherein the decorative features, when illuminated by the light-emitting devices, represent at least one of numbers, letters, and symbols.

8. The method (500) of claim 1, wherein the injection molding (520) of the other component includes forming at least a back piece or substrate (204) for the pillar assembly (200), the back piece or substrate (204) being formed of either the transparent or translucent polymer or a different material.

9. A pillar assembly (200) of a vehicle, obtained by a method according to any of claims 2 to 8, the pillar assembly (200) comprising:
a substrate (204);
a first film layer (404), comprising decorative features on a first side (side A, 408) and a capacitive-sensing layer (424) on an opposing second side (side B, 412);
a separate second film layer (428) having electronic elements (440) on a first side (side A, 432), wherein the the electronic elements (440) include light-emitting devices;
a transparent or translucent polymer (444), provided between the second side (412) of the first film layer (404) and the first side (432) of the second film layer (428);
a transparent layer (448) formed on the first side (408) of the first film layer (404), and
a wiring connected to the plurality of light emitting devices and the capacitive-sensing layer (424), the wiring being configured to connect to control circuitry.

10. The pillar assembly (200) of claim 9, wherein the substrate (204) is a thermoplastic polymer and the transparent layer is a thermoplastic.

11. The pillar assembly (200) of claim 10, wherein the thermoplastic polymer substrate comprises acrylonitrile butadiene styrene -ABS-, and wherein the transparent thermoplastic layer comprises polymethyl methacrylate -PMMA-.

12. The pillar assembly (200) of claim 9, wherein the transparent layer (448) comprises polyurethane.

13. The pillar assembly (200) of claim 9, wherein, when activated, the plurality of light emitting devices are configured to illuminate the displayable elements for viewing by a user.

14. The pillar assembly of claim 9, wherein at least one of the capacitive-sensing layer (220, 424) and the control circuitry (236) are configured to capture a touch input or a gesture from a user.

## Patentansprüche

1. Verfahren (500) zum Herstellen eines Holmeinsatzes (400) für eine Holmanordnung (200) eines Fahrzeugs, das Verfahren umfassend:
Erwirken (504) einer ersten Folienschicht (404);
Ausbilden dekorativer Merkmale bezüglich einer ersten Seite (Seite A, 408) der ersten Folienschicht (404) und Aufbringen (508) leitfähiger Tinte auf eine entgegengesetzte zweite Seite (Seite B, 412) der ersten Folienschicht (404), um eine modifizierte erste Folienschicht zu erwirken;
Erwirken (512) einer getrennten zweiten Folienschicht (428) ;
mindestens eines aus Drucken und Anbringen (512) elektronischer Elemente (440) auf eine(r) erste(n) Seite (Seite A, 432) der zweiten Folienschicht (428), um eine modifizierte zweite Folienschicht zu erwirken, wobei die elektronischen Elemente (440) lichtemittierende Vorrichtungen umfassen;
Einspritzen (516) eines durchsichtigen oder durchscheinenden Polymers (444) zwischen die zweite Seite (412) der modifizierten ersten Folienschicht (404) und der ersten Seite (432) der modifizierten zweiten Folienschicht (428) ;
nach dem Einspritzen des durchsichtigen oder durchscheinenden Polymers (444), Fluten (524) eines Materials über die erste Seite (408) der modifizierten ersten Folienschicht (404), um eine durchsichtige Schicht (448) auszubilden.

2. Verfahren (500) nach Anspruch 1, ferner umfassend:
Erwirken eines Holmeinsatzes (400), der aus der modifizierten ersten Folienschicht (404), der modifizierten zweiten Folienschicht (428) und dem dazwischen liegenden durchsichtigen oder durchscheinenden Polymer (444) ausgebildet ist; und
Verwenden des Holmeinsatzes (400) als Einsatz für das Spritzgießen (520) einer anderen Komponente, um die Holmanordnung (200) auszubilden,
wobei das Fluten (524) nach dem Ausbilden der Holmanordnung (200) durchgeführt wird.

3. Verfahren (500) nach Anspruch 1, wobei die erste Folienschicht (404) undurchsichtig ist, und
wobei die dekorativen Merkmale Öffnungen (224) entsprechen, die durch die modifizierte erste Folienschicht (404) definiert werden.

4. Verfahren (500) nach Anspruch 1, wobei die erste Folienschicht (404) durchsichtig oder durchscheinend ist, und wobei die dekorativen Merkmale Abschnitten der ersten Seite (408) der modifizierten ersten Folienschicht (404) entsprechen, die nicht mit einer undurchsichtigen Tinte oder einem undurchsichtigen Material (416) bedeckt sind.

5. Verfahren (500) nach Anspruch 1, wobei das beim Fluten verwendete Material (524) Polyurethan ist.

6. Verfahren (500) nach Anspruch 1, die elektronischen Elemente (440) ferner umfassend
(i) erste Verdrahtung, die mit den lichtemittierenden Vorrichtungen verbunden und zum Verbinden mit Steuerschaltung konfiguriert ist, und
(ii) zweite Verdrahtung, die mit der leifähigen Tinte verbunden und zum Verbinden mit Steuerschaltung konfiguriert ist.

7. Verfahren (500) nach Anspruch 1, wobei die dekorativen Merkmale mindestens eines aus Zahlen, Buchstaben und Symbolen darstellen, wenn sie von den lichtemittierend Vorrichtungen beleuchtet werden.

8. Verfahren (500) nach Anspruch 1, wobei das Spritzgießen (520) der anderen Komponente das Ausbilden von zumindest einem Rückenteil oder Substrat (204) für die Holmanordnung (200) umfasst, wobei das Rückenteil oder Substrat (204) aus entweder dem durchsichtigen oder durchscheinenden Polymer oder einem anderen Material ausgebildet ist.

9. Holmanordnung (200) eines Fahrzeugs, Erwirkt anhand eines Verfahrens nach einem der Ansprüche 2 bis 8, die Holmanordnung (200) umfassend:
ein Substrat (204);
eine erste Folienschicht (404), die dekorative Merkmale auf einer ersten Seite (Seite A, 408) und eine kapazitive Sensorschicht (424) auf einer entgegengesetzten zweiten Seite (Seite B, 412) umfasst;
eine getrennte zweite Folienschicht(428), die elektronische Elemente (440) auf einer ersten Seite (Seite A, 432) aufweist, wobei die elektronischen Elemente (440) lichtemittierende Vorrichtungen umfassen;
ein durchsichtiges oder durchscheinendes Polymers (444), das zwischen der zweiten Seite (412) der ersten Folienschicht (404) und der ersten Seite (432) der zweiten Folienschicht (428) vorgesehen ist;
eine durchsichtige Schicht (448), die auf der ersten Seite (408) der ersten Folienschicht (404) ausgebildet ist, und
eine Verdrahtung, die mit den mehreren lichtemittierenden Vorrichtungen und der kapazitiven Sensorschicht (424) verbunden ist, wobei die Verdrahtung zum Verbinden mit Steuerschaltung konfiguriert ist.

10. Holmanordnung (200) nach Anspruch 9, wobei das Substrat (204) ein thermoplastisches Polymer und die durchsichtige Schicht ein Thermoplast ist.

11. Holmanordnung (200) nach Anspruch 10, wobei das thermoplastische Polymersubstrat Acrylnitril-Butadien-Styrol -ABS- umfasst, und wobei die durchsichtige thermoplastische Schicht Polymethylmethacrylat -PMMAumfasst.

12. Holmanordnung (200) nach Anspruch 9, wobei die durchsichtige Schicht (448) Polyurethan umfasst.

13. Holmanordnung (200) nach Anspruch 9, wobei die mehreren lichtemittierenden Vorrichtungen bei Aktivierung zum Beleuchten der anzeigbaren Elemente konfiguriert sind, damit sie vom Benutzer gesehen werden können.

14. Holmanordnung nach Anspruch 9, wobei mindestens eine aus der kapazitiven Sensorschicht (220, 424) und der Steuerschaltung (236) zum Erfassen einer Berührungseingabe oder einer Geste von einem Benutzer konfiguriert ist.

## Revendications

1. Procédé (500) de fabrication d'un insert de montant (400) pour un ensemble montant (200) d'un véhicule, le procédé comprenant :
obtenir (504) une première couche de film (404) ;
former des éléments décoratifs par rapport à un premier côté (côté A, 408) de la première couche de film (404) et appliquer (508) de l'encre conductrice sur un second côté opposé (côté B, 412) de la première couche de film (404) pour obtenir une première couche de film modifiée ;
obtenir (512) une seconde couche de film séparée (428) ;
imprimer et/ou attacher (512) des éléments électroniques (440) à un premier côté (côté A, 432) de la seconde couche de film (428) pour obtenir une seconde couche de film modifiée, les éléments électroniques (440) comprenant des dispositifs d'émission de lumière ;
injecter (516) un polymère transparent ou translucide (444) entre le second côté (412) de la première couche de film modifiée (404) et le premier côté (432) de la seconde couche de film modifiée (428) ;
après l'injection du polymère transparent ou translucide (444), balayer (524) un matériau sur le premier côté (408) de la première couche de film modifiée (404) pour former une couche transparente (448).

2. Procédé (500) selon la revendication 1, comprenant en outre :
obtenir un insert de montant (400) formé de la première couche de film modifiée (404), de la seconde couche de film modifiée (428) et du polymère transparent ou translucide (404) entre elles ; et
utiliser l'insert de montant (400) comme insert pour mouler par injection (520) un autre composant pour former l'ensemble montant (200),
le balayage (524) étant réalisé après la formation de l'ensemble montant (200).

3. Procédé (500) selon la revendication 1, dans lequel la première couche de film (404) est opaque, et les éléments décoratifs correspondent à des ouvertures (224) définies par la première couche de film modifiée (404).

4. Procédé (500) selon la revendication 1, dans lequel la première couche de film (404) est transparente ou translucide, et les éléments décoratifs correspondent à des parties du premier côté (408) de la première couche de film modifiée (404) qui ne sont pas recouvertes par une encre ou matériau opaque (416).

5. Procédé (500) selon la revendication 1, dans lequel le matériau utilisé dans le balayage (524) est le polyuréthane.

6. Procédé (500) selon la revendication 1, dans lequel les éléments électroniques (440) comprennent en outre
(i) un premier câblage connecté aux dispositifs d'émission de lumière et configuré pour être connecté à des circuits de commande, et
(ii) un second câblage connecté à l'encre conductrice et configuré pour être connecté aux circuits de commande.

7. Procédé (500) selon la revendication 1, dans lequel les éléments décoratifs, lorsqu'éclairés par les dispositifs d'émission de lumière, représentent au moins des chiffres, des lettres ou des symboles.

8. Procédé (500) selon la revendication 1, dans lequel le moulage par injection (520) de l'autre composant comprend former au moins un élément arrière ou un substrat (204) pour l'ensemble montant (200), l'élément arrière ou le substrat (204) étant fait soit du polymère transparent ou translucide soit d'un matériau différent.

9. Ensemble montant (200) d'un véhicule, obtenu par un procédé selon l'une quelconque des revendications 2 à 8, l'ensemble montant (200) comprenant :
un substrat (204) ;
une première couche de film (404), comprenant des éléments décoratifs sur un premier côté (côté A, 408) et une couche de détection capacitive (424) sur un second côté opposé (côté B, 412) ;
une seconde couche de film séparée (428) ayant des éléments électroniques (440) sur un premier côté (côté A, 432), les éléments électroniques (440) comprenant des dispositifs d'émission de lumière ;
un polymère transparent ou translucide (444) situé entre le second côté (412) de la première couche de film (404) et le premier côté (432) de la seconde couche de film (428) ;
une couche transparente (448) formée sur le premier côté (408) de la première couche de film (404) ; et
un câblage connecté à la pluralité de dispositifs d'émission de lumière et à la couche de détection capacitive (424), le câblage étant configuré pour être connecté à des circuits de commande.

10. Ensemble montant (200) selon la revendication 9, dans lequel le substrat (204) est un polymère thermoplastique et la couche transparente est un thermoplastique.

11. Ensemble montant (200) selon la revendication 10, dans lequel le substrat de polymère thermoplastique comprend de l'acrylonitrile-butadiène-styrène -ABS- et la couche thermoplastique transparente comprend du méthacrylate de polyméthyle -PMMA-.

12. Ensemble montant (200) selon la revendication 9, dans lequel la couche transparente (448) comprend du polyuréthane.

13. Ensemble montant (200) selon la revendication 9, dans lequel, lorsqu'activés, la pluralité de dispositifs d'émission de lumière sont configurés pour éclairer les éléments affichables pour une visualisation par un utilisateur.

14. Ensemble montant selon la revendication 9, dans lequel au moins un parmi la couche de détection capacitive (220, 424) et les circuits de commande (236) est configuré pour capturer une entrée tactile ou un geste d'un utilisateur.
